# EUROPEAN PATENT APPLICATION

(11) **EP 3 203 723 A1**
(43) Date of publication of application: **09.08.2017**
(21) Application number: 15847259.7
(22) Date of filing: 28.09.2015
(51) Int. Cl.: H04N 5/225, H04N 5/341, H04N 5/91

(54) **ELECTRONIC DEVICE**

(30) Priority: 30.09.2014 JP 2014202291
(71) Applicant: Nikon Corporation, Tokyo 108-6290 (JP)
(72) Inventor: FUJIO, Shigenori, Tokyo 108-6290 (JP); YASUDA, Kiyoshi, Tokyo 108-6290 (JP)
(74) Representative: Hoffmann Eitle
(86) International application number: PCT/JP2015/077385
(87) International publication number: WO 2016/052438

(57) **Abstract**

An electronic device includes: an input unit that inputs imaging condition data for each imaging region of an imaging unit that has a plurality of imaging regions with the imaging conditions being different for each of the imaging regions, and position information data for the imaging regions; and a recording control unit that records, in a recording unit, imaging condition data for the imaging regions and position information data for the imaging regions, both are inputted from the input unit.

## Description

### TECHNICAL FIELD

The present invention relates to an electronic device.

### BACKGROUND ART

An electronic device that is provided with an image sensor in which an image capturing chip of the backside illumination type and a signal processing chip are laminated together (hereinafter termed a laminated type image sensor) has been per se proposed (refer to Patent Document #1). In such a laminated type image sensor, the image capturing chip of the backside illumination type and the signal processing chip are laminated together so as to be connected together at each of predetermined regions via micro bumps.

### CITATION LIST

### PATENT LITERATURE

Patent Document #1: Japanese Laid-Open Patent Publication 2006-49361.

### SUMMARY OF INVENTION

### TECHNICAL PROBLEM

With an electronic device incorporating such a prior art laminated type image sensor, there have not been many proposals for dividing an image into image regions including one, or two or more of the regions described above so as to acquire captured images for each of those imaging regions, and it cannot be said that the convenience of use of the electronic devices that incorporate laminated type image sensors has been satisfactory.

### SOLUTION TO PROBLEM

According to the first aspect of the present invention, an electronic device, comprises: an input unit that inputs imaging condition data for each imaging region of an imaging unit that has a plurality of imaging regions with the imaging conditions being different for each of the imaging regions, and position information data for the imaging regions; and a recording control unit that records, in a recording unit, imaging condition data for the imaging regions and position information data for the imaging regions, both are inputted from the input unit.

According to the second aspect of the present invention, in the electronic device according to the first aspect, it is preferred that the position information data for the imaging regions is position information data for the imaging regions in the imaging unit.

According to the third aspect of the present invention, in the electronic device according to the first or second aspect, it is preferred that the input unit inputs image data generated by the imaging unit, in which the imaging conditions are different for each of the imaging regions; and the recording control unit records the image data inputted from the input unit in the recording unit.

According to the fourth aspect of the present invention, in the electronic device according to the third aspect, it is preferred that the recording control unit records image data in the recording unit, specifying the positions of the imaging regions as the position information data for the imaging regions.

According to the fifth aspect of the present invention, in the electronic device according to the third or fourth aspect, it is preferred that the input unit inputs; as the image data, image data generated by the imaging unit upon which a first imaging condition is set for a first imaging region among the plurality of imaging regions and a second imaging condition is set for a second imaging region among the plurality of imaging regions; as the imaging condition data, data of the first imaging condition and data of the second imaging condition; and as the position information data for the imaging regions, position information data for the second imaging region, and the recording control unit records in the recording unit; as the image data, image data, inputted from the input unit, generated by the imaging unit upon which the first imaging condition is set for the first imaging region and the second imaging condition is set for the second imaging region; as the imaging condition data, the data of the first imaging condition and the data of the second imaging condition; and as the position information data for the imaging regions, the position information data for the second imaging region.

According to the sixth aspect of the present invention, in the electronic device according to the fifth aspect, it is preferred that the recording control unit records in the recording unit, as the position information data for the second imaging region, image data specifying the position of the second imaging region.

According to the seventh aspect of the present invention, in the electronic device according to the sixth aspect, it is preferred that the recording control unit records, in the recording unit, a single file containing the image data, the data of the first imaging condition, the data of the second imaging condition, and image data specifying the position of the second imaging region in the imaging unit.

According to the eighth aspect of the present invention, in the electronic device according to the seventh aspect, it is preferred that the single image file is an image file in a multi-picture format.

According to the ninth aspect of the present invention, in the electronic device according to the seventh aspect, it is preferred that the recording control unit records, in the recording unit, a first file that contains the image data and the data of the first imaging condition, and a second file that contains the data of the second imaging condition and image data specifying the position of the second imaging region.

According to the tenth aspect of the present invention, in the electronic device according to the ninth aspect, it is preferred that the recording control unit records the first file and the second file in mutual correspondence in the recording unit.

According to the eleventh aspect of the present invention, in the electronic device according to the first through tenth aspects, it is preferred that the imaging conditions include at least one of exposure time of the imaging unit, amplification ratio, and frame rate.

### BRIEF DESCRIPTION OF DRAWINGS

(FIG. 1) FIG. 1 is a block diagram showing the structure of an image capturing device according to a first embodiment;
(FIG. 2) FIG. 2(a) is a plan view schematically showing an imaging surface of an image sensor, and FIG. 2(b) is an enlarged plan view of a partial region of that imaging surface;
(FIG. 3) FIG. 3 is a figure schematically showing a situation in which a subject image is displayed upon a liquid crystal monitor;
(FIG. 4) FIG. 4(a) is a figure showing subdivided regions, and FIG. 4(b) is a table showing an example of imaging conditions for each of those regions;
(FIG. 5) FIG. 5 is a figure in which boundary lines of the regions of the subject image are shown in a superimposing manner;
(FIG. 6) FIG. 6 is a mask image for a region corresponding to a building;
(FIG. 7) FIG. 7 is a mask image for a region corresponding to mountains;
(FIG. 8) FIG. 8 is a mask image for a region corresponding to the background;
(FIG. 9) FIG. 9 is a figure showing the basic structure of a multi-picture format;
(FIG. 10) FIG. 10 is a figure conceptually showing an example of a single image file that has been generated by a recording control unit in accordance with the multi-picture format;
(FIG. 11) FIG. 11 is a flow chart of processing for generating a single image file according to the multi-picture format and for recording that file into a memory card;
(FIG. 12) FIG. 12 is a block diagram showing the structure of an image capturing device according to a second embodiment;
(FIG. 13) FIG. 13 is a figure showing a variation;
(FIG. 14) FIG. 14 is a sectional view of a laminated type image sensor;
(FIG. 15) FIG. 15 is a figure for explanation of a pixel array and of blocks upon an image capturing chip;
(FIG. 16) FIG. 16 is a circuit diagram corresponding to a unit group upon the image capturing chip; and
(FIG. 17) FIG. 17 is a block diagram showing the functional structure of the image sensor.

### DESCRIPTION OF EMBODIMENTS

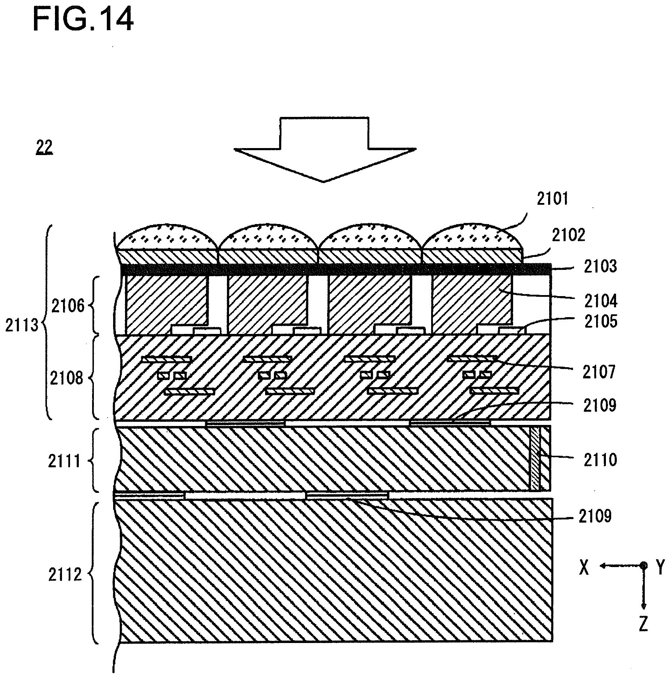

First, a laminated type image sensor 22 will be explained that is provided to an electronic device (for example, to an image capturing device 10) according to an embodiment of the present invention. It should be understood that this laminated type image sensor 22 is the sensor described in Japanese Patent Application 2012-139026, previously filed by the applicant of the present application. FIG. 14 is a sectional view of this laminated type image sensor 22. The image sensor 22 comprises an image capturing chip 2113 of the backside illumination type that outputs pixel signals corresponding to the light incident thereupon, a signal processing chip 2111 that processes these pixel signals, and a memory chip 2112 that stores these pixel signals. The image capturing chip 2113, the signal processing chip 2111, and the memory chip 2112 are laminated together, and are mutually electrically connected together by electrically conductive bumps 2109 made of copper or the like.

It should be understood that the incident light is principally incident towards the +Z axis direction shown by the white outlined arrow sign, as seen in the figure. In this embodiment, the surface of the image capturing chip 2113 on the side upon which the incident light is incident is termed its "back surface". Moreover, as shown by the coordinate axes, the leftward direction upon the drawing paper orthogonal to the Z axis is taken as being the +X axis direction, and the direction orthogonal to the Z axis and to the X axis and pointing forward from the drawing paper is taken as being the +Y axis direction. In some of the following figures, the coordinate axes shown in FIG. 14 are taken as standard, and these coordinate axes are displayed so that the respective orientation of each figure can be understood.

An example of the image capturing chip 2113 is a backside illumination type MOS image sensor. A PD layer 2106 is provided on the back surface side of a wiring layer 2108. This PD layer 2106 is disposed two dimensionally, and includes a plurality of PDs (photo-diodes) 2104 that accumulate electric charge according to the light incident thereupon, and a plurality of transistors 2105 that are provided to correspond to the PDs 2104.

Color filters 2102 are provided on the side of the PD layer 2106 upon which light is incident, via a passivation layer 2103. These color filters 2102 are of a plurality of types that pass mutually different wavelength regions, and have a specific arrangement respectively corresponding to each of the PDs 2104. The arrangement of the color filters 2102 will be described hereinafter. A group of one color filter 2102, one PD 2104, and one transistor 2105 constitutes one pixel.

Micro lenses 2101 corresponding to each pixel are provided on the sides of the color filters 2102 upon which light is incident. These micro lenses 2101 condense the incident light upon their corresponding PDs 2104.

The wiring layer 2108 includes wiring 2107 that transmits the pixel signals from the PD layer 2106 to the signal processing chip 2111. This wiring 2107 may be multi-layered, and also may be provided with passive elements and active elements.

A plurality of bumps 2109 are disposed on the surface of the wiring layer 2108. This plurality of bumps 2109 are positionally aligned with a plurality of bumps 2109 that are provided upon the facing surface of the signal processing chip 2111, and the bumps 2109 that are mutually positionally aligned are joined together and are electrically connected together by applying pressure and so on to the image capturing chip 2113 and the signal processing chip 2111.

In a similar manner, pluralities of bumps 2109 are disposed upon the mutually facing surfaces of the signal processing chip 2111 and of the memory chip 2112. By these bumps 2109 being mutually positionally aligned, and by applying pressure and so on to the signal processing chip 2111 and to the memory chip 2112, the bumps 2109 that are mutually positionally aligned are joined together and are electrically connected together.

It should be understood that the junctions between the bumps 2109 are not limited to being made by copper bump bonding by solid phase diffusion; it would also be acceptable to arrange to employ micro bump connection by solder melting. Furthermore, for example, it will be sufficient to provide around one bump 2109 for one of the blocks described hereinafter. Accordingly, it would be possible for the sizes of the bumps 2109 to be made to be larger than the pitch of the PDs 2104. Moreover, it would also be possible for bumps that are larger than the bumps 2109 corresponding to the pixel region to be provided in addition in the peripheral region outside the pixel region in which the pixels are disposed.

The signal processing chip 2111 has a TSV (through silicon via) 2110 that mutually connects together circuits that are provided on its front and back surfaces. It is desirable for this TSV 2110 to be provided in the peripheral region. Moreover, TSVs 2110 may also be provided in the peripheral regions of the image capturing chip 2113, and in the memory chip 2112.

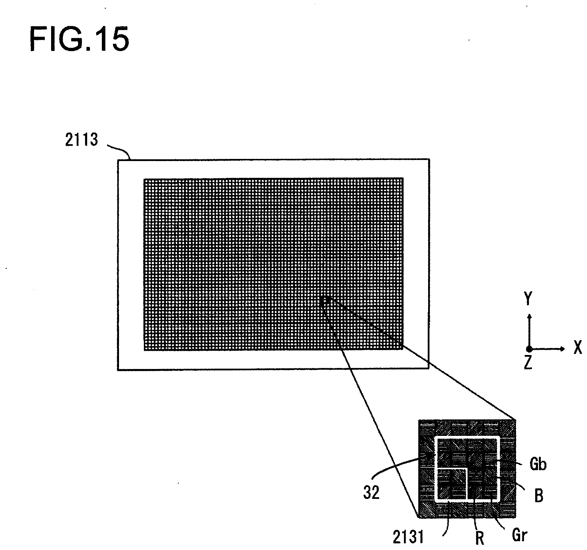

FIG. 15 is a figure for explanation of the arrangement of pixels upon the image capturing chip 113. In particular, this figure shows a situation in which the image capturing chip 2113 is observed from its back surface side. For example, eight million or more pixels may be arranged in the pixel region in the form of a matrix. In this embodiment, for example, four adjacent pixels in a 2×2 configuration constitute a single block 2131. And four adjacent blocks in a 2×2 configuration constitute a single unit group 32. The lattice lines in the figure conceptually show the way in which the blocks 2131 and the unit groups 32 are built up from adjacent pixels. The number of pixels making up each block 2131, and the number of blocks 2131 making up each unit group 32, are not limited to the example described above; each of them could be greater or smaller.

As shown in the enlarged view of a part of the pixel region, a block 2131 includes four so called Bayer arrays, each consisting of green pixels Gb and Gr, a blue pixel B, and a red pixel R, arranged up, down, left and right. The green pixels are pixels having green filters as their color filters 2102, and receive light of green wavelength range in the incident light. In a similar manner, the blue pixels are pixels having blue filters as their color filters 2102 and receive light of blue wavelength range in the incident light, and the red pixels are pixels having red filters as their color filters 2102 and receive light of red wavelength range in the incident light.

In this embodiment, a plurality of blocks 2131 are defined so that at least one group of four pixels Gb, Gr, B, and R for one block 2131 are included therein. Each of the blocks 2131 can be individually controlled by control parameters that are determined for the four pixels in that block 2131. In other words, image signals whose imaging conditions are different from each other can be respectively acquired for the pixel group included in some block 2131 and for the pixel group included in some other block 2131. Examples of control parameters are frame rate, gain, sub-sampling ratio, number of rows or number of columns of pixel signals to be added together, charge accumulation time or number of times for charge accumulation, number of bits for digitalization, and so on. Furthermore, a control parameter may be a parameter for image processing after acquisition of the image signals from the pixels.

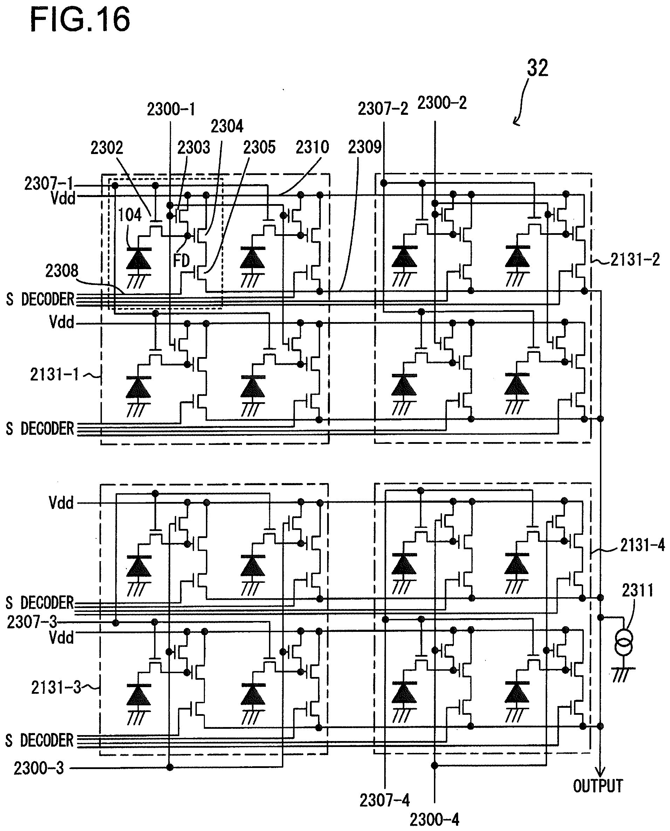

FIG. 16 is a circuit diagram corresponding to a single unit group 32 upon the image capturing chip 2113. In FIG. 16, the representative rectangle surrounded by the dotted line shows the circuit that corresponds to a single pixel. Moreover, each of the rectangles surrounded by a single dotted broken line corresponds to a single block 2131. It should be understood that at least some of the transistors explained in the following description correspond to the transistors 2105 of FIG. 14.

As described above, each of the unit groups 32 is formed from four of the blocks 2131. Reset transistors 2303 of the pixels included in the unit group 32 are turned ON and OFF by units of the blocks 2131. Moreover, transfer transistors 2302 of the pixels included in the unit group 32 are also turned ON and OFF by units of the blocks 2131. In the example shown in FIG. 16, reset wiring 2300-1 is provided for turning the four reset transistors 2303 corresponding to the upper left block 2131-1 ON and OFF, and also TX wiring 2307-1 is provided for supplying transfer pulses to the four transfer transistors 2302 corresponding to that same block 2131-1.

In a similar manner, reset wiring 2300-3 is provided separately from the reset wiring 2300-1 described above for turning the four reset transistors 2303 corresponding to the lower left block 2131-3 ON and OFF. Moreover, TX wiring 2307-3 is provided separately from the TX wiring 2307-1 described above for supplying transfer pulses to the four transfer transistors 2302 corresponding to that same block 2131-3.

In a similar manner for the upper right block 2131-2 and for the lower right block 2131-4 as well, respective reset wiring 2300-2 and TX wiring 2307-2, and reset wiring 2300-4 and TX wiring 2307-4, are provided respectively for those blocks 2131.

The sixteen PDs 2104 corresponding to each pixel are connected to the respectively corresponding transfer transistors 2302. And transfer pulses are supplied via the TX wiring for each of the blocks 2131 described above to the gates of the transfer transistors 2302. Moreover, along with the drains of the transfer transistors 2302 being connected to the sources of the corresponding reset transistors 2303, so-called floating diffusion FD between the drains of the transfer transistors 2302 and the sources of the reset transistors 2303 are connected to the gates of corresponding amplification transistors 2304.

The drains of the reset transistors 2303 are connected in common to Vdd wiring 2310 to which power supply voltage is supplied. And reset pulses are supplied via reset wiring to the gates of the reset transistors 2303 of each of the blocks 2131 described above.

The drains of the amplification transistors 2304 are connected in common to the Vdd wiring 2310, to which power supply voltage is supplied. Furthermore, the source of each of the amplification transistors 2304 is connected to the drain of the corresponding selection transistor 2305. And decoder wiring 2308, to which selection pulses are supplied, is connected to the gate of each of the selection transistors 2305. In this embodiment, such decoder wiring 2308 is provided independently for each of the sixteen selection transistors 2305. And the source of each of the selection transistors 2305 is connected to common output wiring 2309. A load current source 2311 supplies current to the output wiring 2309. In other words, the output wiring 2309 for the selection transistors 2305 is configured according to the source follower. It should be understood that the load current source 2311 could be provided upon the side of the image capturing chip 2113, or could be provided on the side of the signal processing chip 2111.

Now, the flow from the start of accumulation of electric charge to pixel output after the end of that accumulation will be explained. When reset pulses are applied to the reset transistors 2303 via the reset wiring of each of the blocks 2131 described above, and simultaneously transfer pulses are applied to the transfer transistors 2302 via the TX wiring of each of the blocks 2131 described above, then the electrical potentials of the PDs 2104 and the floating diffusions FD are reset for each of the blocks 2131 described above.

When the application of a transfer pulse to each of the PDs 2104 is canceled, the received light that is incident thereupon starts to be converted into electric change, which is accumulated. Thereafter, when a transfer pulse is applied again in the state in which no reset pulse is being applied, the accumulated electric charge is transferred to the floating diffusion FD, and the electrical potential of the floating diffusion FD becomes a signal electrical potential after charge accumulation from the reset electrical potential. And, when a selection pulse is applied to the selection transistor 2305 via the decoder wiring 2308, fluctuation of the signal electrical potential of the floating diffusion FD is transmitted to the output wiring 2309 via the amplification transistor 2304 and the selection transistor 2305. Due to this, a pixel signal corresponding to the reset electrical potential and to the signal electrical potential is outputted from the unit pixel to the output wiring 2309.

As described above, in this embodiment, reset wiring and TX wiring are provided in common for each of the four pixels that make up each of the blocks 2131. In other words, each reset pulse and each transfer pulse is applied simultaneously to all of the four pixels within the same block 2131. Accordingly, all of the pixels that make up one of the blocks 2131 start accumulation of electric charge at the same timing, and end accumulation of electric charge at the same timing. However, by selection pulses being applied in sequence to the respective selection transistors 2305, the pixel signals corresponding to the accumulated electric charges are selectively outputted from the output wiring 2309.

In this manner, in this embodiment, it is possible to control the timing of the start of charge accumulation for each of the blocks 2131 individually. To put it in another manner, it is possible to capture images at different timings for different ones of the blocks 2131.

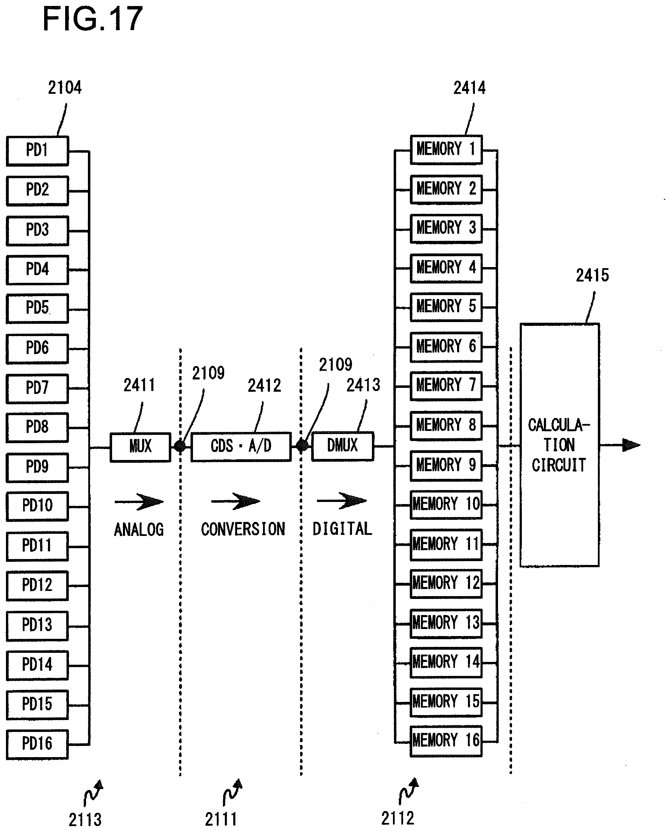

FIG 17 is a block diagram showing the functional structure of the image sensor 22. An analog multiplexer 2411 selects the sixteen PDs 2104 that make up a unit group 32 in order, and outputs the respective pixel signals to the output wiring 2309 that is provided to correspond to that unit group 32. This multiplexer 2411 is formed upon the image capturing chip 2113, along with the PDs 2104.

The pixel signals outputted via the multiplexer 2411 are performed correlated double sampling (CDS) and analog/digital (A/D) conversion by a signal processing circuit 2412 that is formed upon the signal processing chip 2111, and that performs correlated double sampling (CDS) and analog/digital (A/D) conversion. The pixel signals that have thus been A/D converted are transferred to a demultiplexer 2413, and are stored in pixel memories 2414 corresponding to the respective pixels. The demultiplexer 2413 and the pixel memories 2414 are formed upon the memory chip 2112.

After a calculation circuit 2415 processes the pixel signals stored in the pixel memories 2414, it transfers them to a subsequent stage image processing unit. The calculation circuit 2415 may be provided upon the signal processing chip 2111, or may be provided upon the memory chip 2112. It should be understood that while, in FIG. 17, the connections for a single unit group 32 are shown, actually these are provided for each of the unit groups 32, and operate in parallel. However, it will be acceptable for an individual calculation circuit 2415 not to be provided for each unit group 32; for example, it would also be acceptable to arrange for a single calculation circuit 2415 to perform sequential processing while referring to the values in the pixel memories 2414 corresponding to each unit group 32 in order.

As described above, output wiring 2309 is provided corresponding to each of the unit groups 32. Since, in the image sensor 22, the image capturing chip 2113, the signal processing chip 2111, and the memory chip 2112 are laminated together, accordingly, by electrically connecting between the chips by using the bumps 2109 in this output wiring 2309, it is possible to route the wiring without making the chips larger in the surface direction.

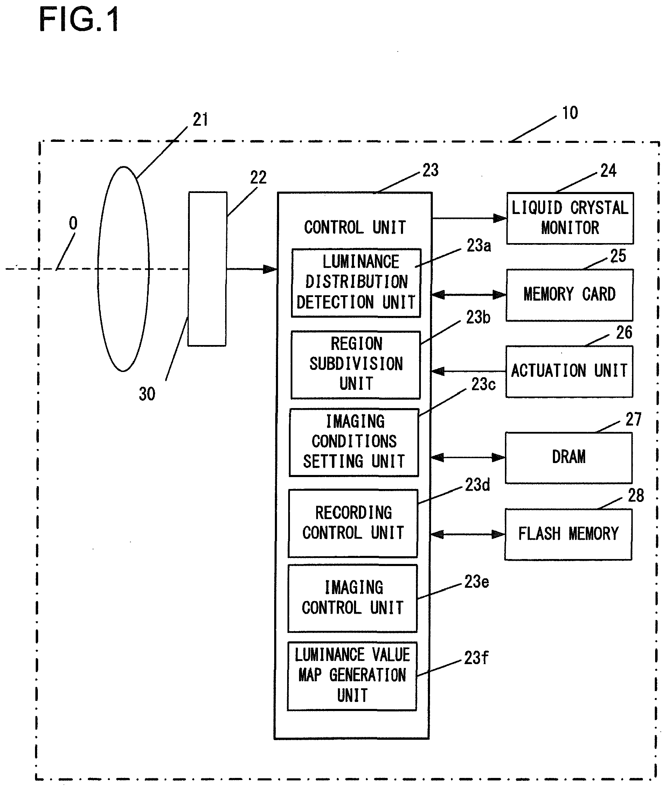

FIG. 1 is a block diagram showing the structure of a recording device according to an embodiment of the present invention. In this embodiment, an image capturing device 10 will be cited and explained as one example of a recording device. This image capturing device 10 comprises an imaging optical system 21, an image sensor 22, a control unit 23, a liquid crystal monitor 23, a memory card 25, an actuation unit 26, a DRAM 27, and a flash memory 28.

The imaging optical system 21 is built from a plurality of lenses, and focuses an image of the subject upon the imaging surface of the image sensor 22. It should be understood that, in FIG. 1, the imaging optical system 21 is schematically shown as being a single lens.

The imaging unit, in other words the image sensor 22, is an image sensor such as, for example, a CMOS or a CCD or the like, and captures an image of a subject which has been focused by the imaging optical system 21 and outputs an image signal. The image sensor 22 has an imaging surface 30 upon which a plurality of image capture pixels are arranged. The control unit 23 is an electronic circuit that controls the various sections of the image capturing device 10, and is built from a CPU and peripheral circuit thereof. A control program that is predetermined in advance is written into the flash memory 28, which is a non-volatile recording medium. By reading in and executing this control program from the flash memory 28, the control unit 23 performs control of the various sections. This control program uses a DRAM 27, which is a volatile recording medium, as a working region.

The liquid crystal monitor 24, which serves as a display unit, is a display device that employs a liquid crystal panel. The control unit 23 causes the image sensor 22 to repeatedly capture images of the subject upon a predetermined cycle (for example 1/60 second). And the control unit 23 performs image processing of various types upon the image signals outputted from the image sensor 22, and generates an image of the subject, i.e. a so-called through image, which it displays upon the liquid crystal monitor 24. Apart from the image of the subject described above, for example, a setting screen for setting imaging conditions and so on may also be displayed upon the liquid crystal monitor 24.

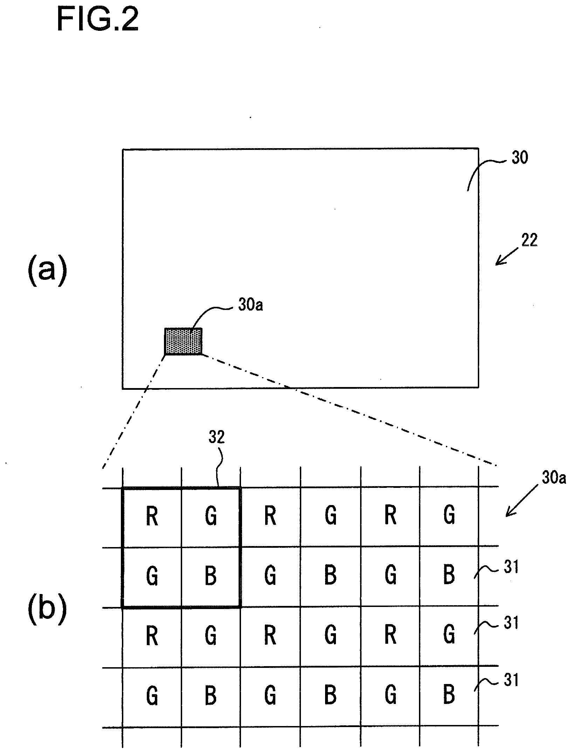

FIG. 2(a)) is a plan view schematically showing the imaging surface 30 of the image sensor 22, and FIG. 2(b) is an enlarged plan view of a partial region 30a of that imaging surface 30. As shown in FIG. 2(b), a large number of image capture pixels 31 are arranged two dimensionally upon the imaging surface 30. Each of the image capture pixels 31 has a respective color filter, not shown in the figures. These color filters are of the three types red (R), green (G), and blue (B), and the symbols "R", "G", and "B" in FIG. 2(b) represent the types of the color filters that the image capture pixels 31 have. As shown in FIG. 2(b), the image capture pixels 31 having color filters of these types are arranged according to a so-called Bayer array upon the imaging surface 30 of the image sensor 2.

The image capture pixels 31 that have red filters photoelectrically convert light, among the incident light, of the red wavelength band, and output received light signals (i.e. photoelectrically converted signals) corresponding thereto. In a similar manner, the image capture pixels 31 that have green filters photoelectrically convert light, among the incident light, of the green wavelength band, and output received light signals corresponding thereto. Moreover, the image capture pixels 31 that have blue filters photoelectrically convert light, among the incident light, of the blue wavelength band, and output received light signals corresponding thereto.

The image sensor 22 of this embodiment is built so as to be capable of controlling each of the unit groups 32 made up from the four adjacent 2-pixel×2-pixel image capture pixels 31 on an individual basis. For example when, for two of the unit groups 32 that are different from one another, electric charge accumulation has started simultaneously, then, for one of the unit groups 32, reading out of the electric charge, in other words reading out of the received light signals, may be performed 1/30 second after the start of accumulation of electric charge, while, for the other unit group 32, reading out of the electric charge may be performed 1/15 second after the start of accumulation of electric charge. To put it in another manner, in a single episode of image capture, the image sensor 22 may set a different exposure time (i.e. a different so-called shutter speed) for each unit group 32.

Apart from the exposure time described above, the image sensor 22 is also capable of making the amplification ratio of the received light signals (i.e. the so-called ISO speed) be different for each of the unit groups 32. Moreover, the image sensor is also capable of changing the timing of start of electric charge accumulation and/or the timing of reading out of the received light signals for each of the unit groups 32; in other words, during capture of a video image, it is also capable of changing the frame rate for each of the unit groups 32. An imaging control unit 23e shown in FIG. 1 controls the imaging conditions for each of the unit groups 32, such as exposure time, amplification ratio, frame rate, and so on.

To summarize the above, the image sensor 22 is built so as to be capable of varying the imaging conditions for each of the unit groups 32, such as exposure time, amplification ratio, frame rate and so on.

On the basis of the image signals outputted from the image sensor 22, the control unit 23 performs image processing of various kinds and generates captured image data. And the control unit 23 generates an image file in which the captured image data and information specifying its photographic conditions are combined into a single file, and records this single image file into the memory card 25, which is a detachable recording medium. The actuation unit 26 has various actuation members such as push buttons and so on, and outputs actuation signals to the control unit 23 according to actuation of these actuation members. It should be understood that, if the liquid crystal monitor 24 is a touch panel type display device, then it will be acceptable to arrange for it to constitute a portion of the actuation unit 26. The control unit 23 performs display control, so as to display the subject image that has been captured by the image sensor 22 upon the liquid crystal monitor 24.

The control unit 23 comprises a luminance distribution detection unit 23a, a region subdivision unit 23b, an imaging conditions setting unit 23c, a recording control unit 23d, an imaging control unit 23e, and a luminance value map generation unit 23f. These various sections are implemented in software by the control unit 23 executing a predetermined control program that is stored in the flash memory 28. It should be understood that, alternatively, it would also be possible to embody these various sections as electronic circuits.

The luminance distribution detection unit 23 a detects the luminance distribution on the basis of the image capture pixels of the image sensor 22 that has captured the image of the subject. And, on the basis of the luminance distribution, the luminance map generation unit 23f generates a luminance value map that specifies the luminance distribution two dimensionally.

On the basis of the luminance value map generated by the luminance value map generation unit 23f, the region subdivision unit 23b subdivides the luminance value map, or the subject image, into a plurality of regions by detecting, upon the luminance value map, approximate luminance value regions that are of approximately the same luminance values or the approximate luminance values are continued; in other words, by detecting approximate luminance value regions where the luminance value continues within a predetermined narrow range. As described hereinafter, when the subject image is being displayed upon the liquid crystal monitor 24, a frame that specifies the regions upon the subject image into which it has been subdivided by the region subdivision unit 23b is displayed as superimposed upon the subject image. It should be understood that the fact that the region subdivision unit 23b demarcates regions upon the subject image only means that the region subdivision unit specifies imaging regions upon the imaging surface of the image sensor 22, in other words that the region subdivision unit partitions that imaging surface.

The imaging conditions setting unit 23c sets imaging conditions for the image sensor 22, such as exposure time, amplification ratio, frame rate and so on. It should be understood that, as described hereinafter, the imaging conditions setting unit 23c sets imaging conditions for each of the regions subdivided by the region subdivision unit 23b.

As described hereinafter, the recording control unit 23d forms the data for the image that was captured under the imaging conditions that were set by the region subdivision unit 23b for each of the subdivided regions, and the imaging conditions for each of those regions, into a single image file, and records that file onto the memory card 25 which is a recording medium detachable from the image capturing device 10. And the imaging control unit 23e mutually independently controls each of the plurality of imaging regions including at least one image capture pixel upon the image sensor 22. In other words, as described above, the imaging control unit 23e controls the imaging conditions such as exposure time, amplification ratio, frame rate and so on for each of the unit groups 32 of the image sensor 22. It should be understood that it would also be acceptable to arrange to equip the functions with the imaging control unit 23e in the image sensor 22.

The image capturing device 10 built as explained above is adapted to be capable of automatically setting imaging conditions for each of the regions subdivided by the region subdivision unit 23b. In the following, this will be explained in detail.

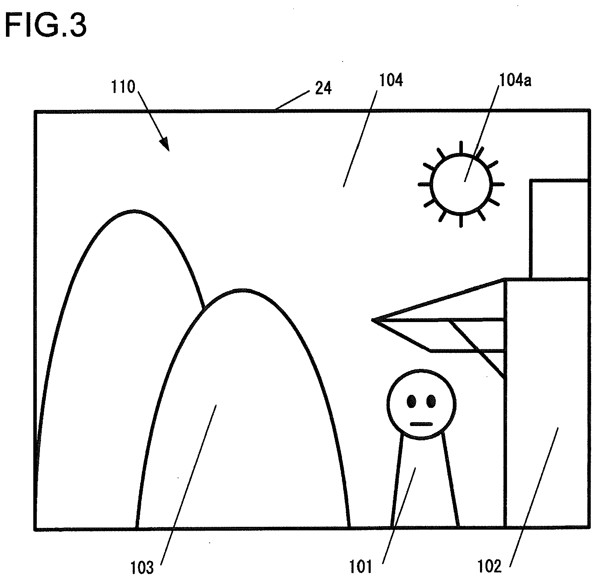

FIG. 3 is a figure schematically showing a situation in which a subject image 110 is displayed upon the liquid crystal monitor 24. In the following explanation, as one example of a subject, it will be supposed that, in the image capturing range of the image capturing device 10, there are present a person 101 at close range, a building 102 also at close range, some mountains 103 at long range, and a background 104 including the Sun 104a also at long range. And it will be supposed that the person 101 and the building 102 are in a backlit state. It should be understood that this subject image 110 is one that, on the basis of exposure conditions according to the photometric value of the luminance of the subject or according to exposure conditions that have been manually set by the user, has been captured under the same imaging conditions (i.e. exposure time, amplification ratio, and frame rate) for all of the unit groups 32, over the entire imaging surface 30.

The luminance distribution detection unit 23a detects the luminance distribution of the subject image 110. And the luminance value map generation unit 23f generates a luminance value map that specifies this luminance distribution that has thus been detected in a two dimensional manner. The luminance value map is a map in which the brightness of each of the image capture pixels (i.e. their luminance values, in other words the Bv values that specify the luminance of the light from the subject that is incident upon each of the image capture pixels) is arranged two dimensionally so as to match the arrangement of the image capture pixels. The luminance value map could also be a map in which the brightnesses of the unit groups 32 (if each unit group 32 includes a single image capture pixel, then the luminance value detected by that image capture pixel, or if each unit group 32 includes a plurality of image capture pixels, then a Bv value that specifies the average value of the luminance values detected by that plurality of image capture pixels) are mapped as arranged in a two dimensional manner to match the arrangement of the unit groups 32.

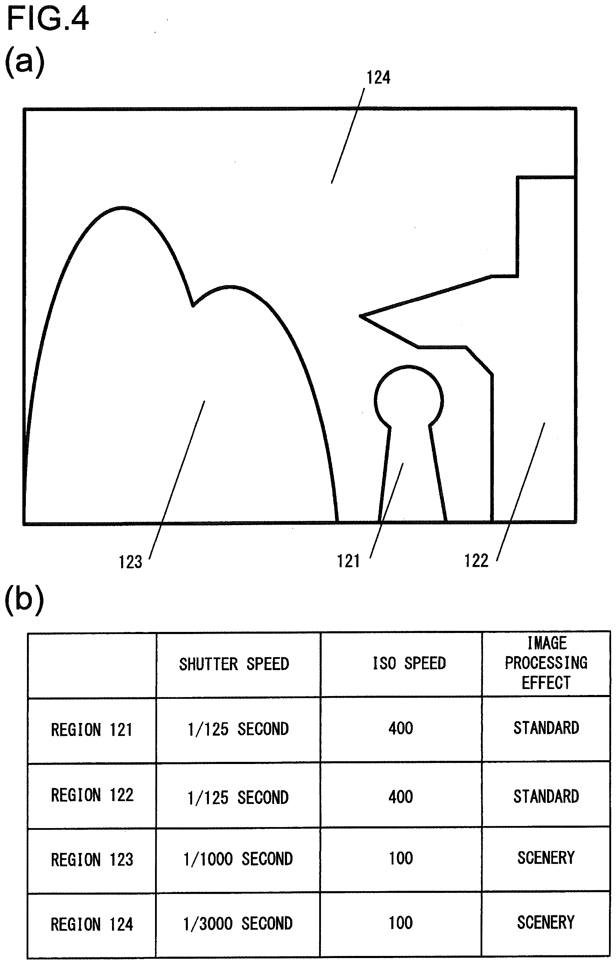

On the basis of the luminance value map generated by the luminance value map generation unit 23f, the region subdivision unit 23b subdivides the luminance value map, or the subject image, into a plurality of regions by detecting approximate luminance value regions in which the approximate luminance value continues. For example, from the subject image 110 shown in FIG. 3, the region subdivision unit 23b may subdivide the subject image 110 into a region 121 including the person 101, a region 122 including the building 102, a region 123 including the mountains 103, and a region 124 including the background 104, as shown in FIG. 4(a).

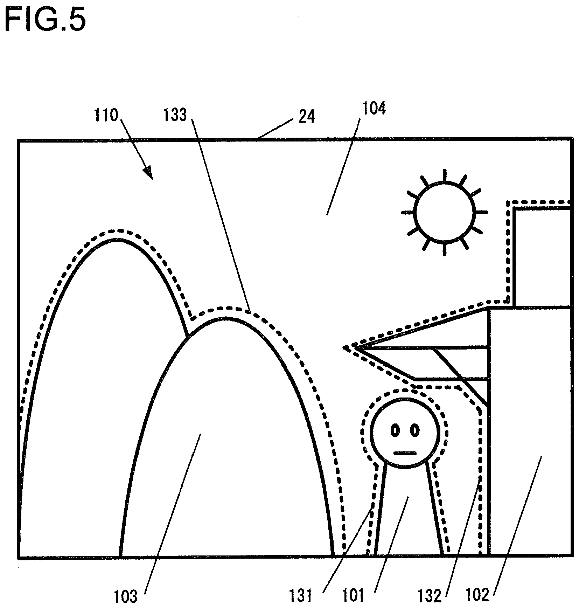

When this region subdivision has been performed by the region subdivision unit 23b, then, as shown in FIG. 5, the control unit 23 explicitly displays the boundary lines 131 through 133 of these regions, as shown by the dotted lines, superimposed upon the subject image 110 that is being displayed upon the liquid crystal monitor 24.

On the basis of the luminance value map that has been generated by the luminance value map generation unit 23f for each of the regions 121 through 124 subdivided by the region subdivision unit 23b, the imaging conditions setting unit 23c sets the shutter speed and the ISO speed and so on, which are imaging conditions. For example, in the case of the subject image 110 shown in FIG. 3, as shown in FIG. 4(b), as imaging conditions for the region 121 including the person 101, the shutter speed is set to 1/125 second and the ISO speed is set to 400. And, as imaging conditions for the region 122 including the building 102, the shutter speed is set to 1/125 second and the ISO speed is set to 400. Moreover, as imaging conditions for the region 123 including the mountains 103, the shutter speed is set to 1/1000 second and the ISO speed is set to 100. And, as imaging conditions for the region 124 including the background 104, the shutter speed is set to 1/3000 second and the ISO speed is set to 100.

As well as setting the imaging conditions, in this embodiment, the imaging conditions setting unit 23c sets image processing effects for each of the regions 121 through 124. As shown in FIG. 4(b), as image processing effects, the imaging conditions setting unit 23c sets "standard" for the region 121 including the person 101 and for the region 122 including the building 102, and sets "scenery" for the region 123 including the mountains 103 and for the region 124 including the background 104. It should be understood that, for establishing the settings of this type of image processing effect for each of the regions 121 through 124, it would be acceptable, for example, to arrange to determine that the mountains 103 and the background 104 are positioned far away on the basis of the amounts of defocusing respectively related to the person 101, the building 102, the mountains 103, and the background 104 that are detected by a phase difference type focus detection device provided to the image capturing device 10 but not shown in the figures, and to set the image processing effect "scenery" for the region 123 including the mountains 103 and for the region 124 including the background 104 on the basis of this determination result. It would also be acceptable to arrange for the imaging conditions setting unit 23c to set an image processing effect "beautiful skin" for the face of a person that has been detected by a face recognition device provided to the image capturing device 10 but not shown in the figures.

Furthermore, the control unit 23 determines a region that is to become main (i.e. a main region) from the subject image 110. For example, if a face recognition device not shown in the figures detects the face of a person from the subject image 110, then the control unit 23 may set the region 121 including the person 101 and moreover including the face of a person that has thus been detected as the main region. Moreover, if the focus detection device has performed focus detection for some specific subject within the plurality of subject images 101 through 104 of the subject image 110, and has performed focus adjustment on the basis thereof, then it will be acceptable to arrange to determine the region containing this specific subject as being the main region. Furthermore it would also be acceptable to arrange, when the control unit 23 has subdivided the subject image into the plurality of regions 121 through 124, for the region whose area is largest, or for a comparatively large region, to be set as the main region, for example the region 123 or 124 in FIG. 4. It should be understood that the regions other than the main region will be termed "ancillary regions".

Although this feature is not shown in the figures, it should be understood that, in the imaging conditions for the various regions that have been set automatically by the imaging conditions setting unit 23c, the user is able manually to change the set value of any desired setting item for any desired region. In other words, for example, as shown in FIG. 5, when, from the subject image 110 displayed upon the liquid crystal monitor 24, it is detected that some one of the regions subdivided by the boundary lines 131 through 133 has been selected by the user, then the control unit 23 may display upon the liquid crystal monitor 24 a settings change screen for changing the settings of the imaging conditions relating to this region that has been selected. The user can set any desired imaging conditions from this settings change screen.

Thereafter, when a release button of the actuation unit 26 or a button that commands image capture processing is actuated, the control unit 23 commands image capture processing under the imaging conditions that have been respectively set by the imaging conditions setting unit 23c for each of the plurality of regions and with the image processing effects that have been determined, and creates a captured image file.

When photographic processing is performed, information including the photographic image data, information relating to the subdivision into regions, information specifying the imaging conditions for each region, and information specifying the image processing conditions for each of the regions is inputted to the recording control unit 23d. It should be understood that, among this information, it may be arranged for the information related to the subdivision into regions to be outputted from the region subdivision unit 23b and to be inputted into the recording control unit 23d, and it may be arranged for the information specifying the imaging conditions for each region to be outputted from the imaging conditions setting unit 23c and to be inputted into the recording control unit 23d.

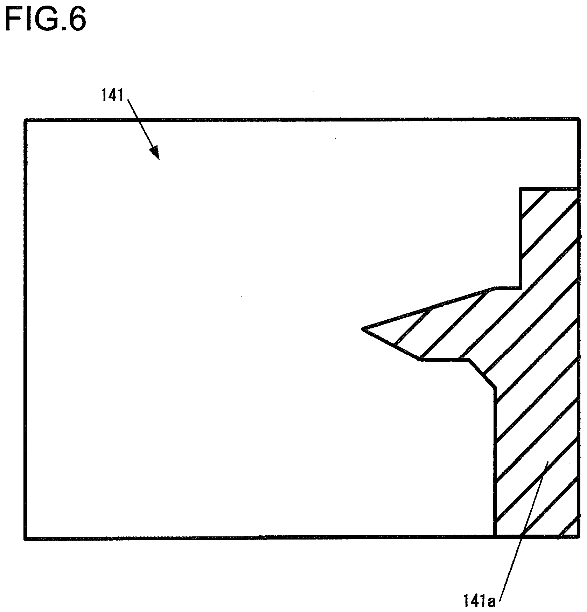

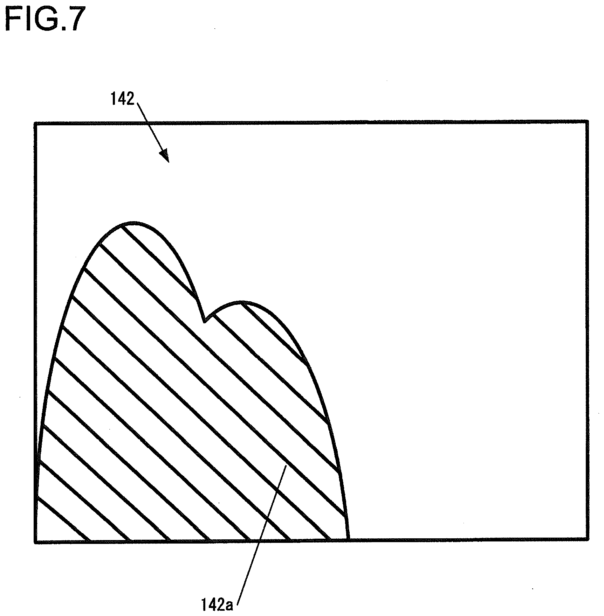

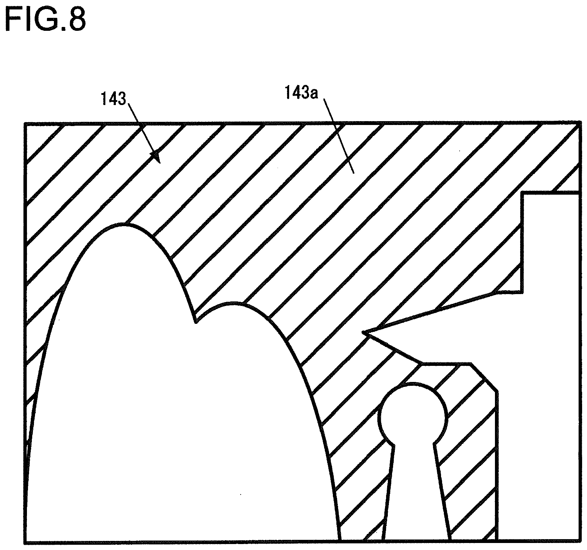

The recording control unit 23d generates the image file in the following manner. First, when the control unit 23 sets the region 121 including the person 110 that includes a face as the main region, the recording control unit 23d generates mask images that specify region information (i.e. region images) that show which regions of the subject image are ancillary regions. In other words, as shown in FIG. 6, the recording control unit 23d generates a mask image 141 having a masking region 141 a corresponding to the region 122 including the building 102, a mask image 142 as shown in FIG. 7 having a masking region 142a corresponding to the region 123 including the mountains 103, and a mask image 143 as shown in FIG. 8 having a masking region 143 a corresponding to the region 124 including the background 104. And the recording control unit 23d creates mask image data from these mask images.

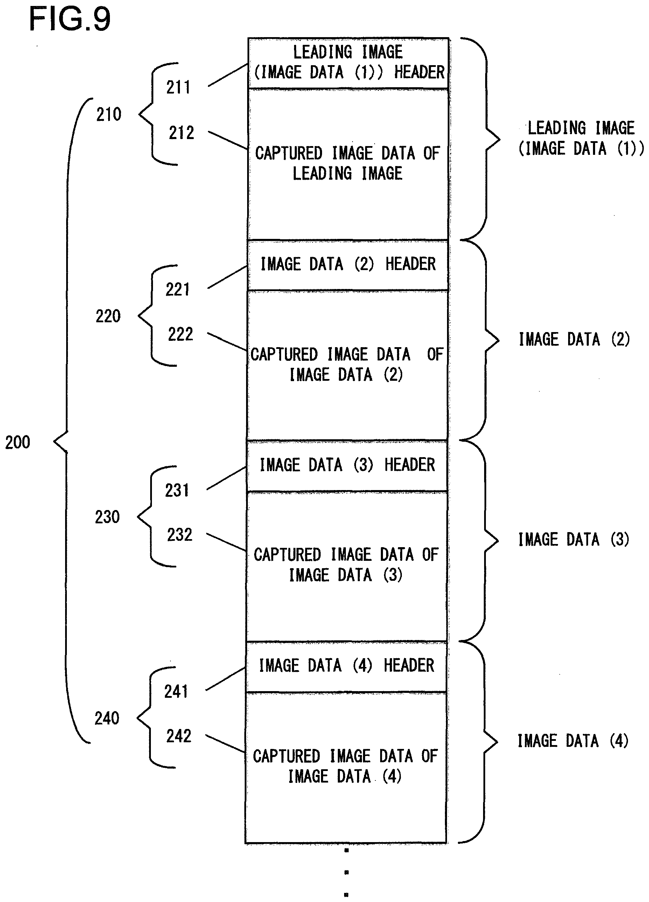

After generating the mask images, the recording control unit 23d stores the captured image data, the mask image data, and the information specifying the imaging conditions for each region, and generates a single image file in multi-picture format, for example in accordance with a per se known multi-picture format. FIG. 9 is a figure showing the basic structure of this multi-picture format (hereinafter this will be termed the MP format). The MP format 200 is a format for recording information about a plurality of image data in a single image file, and recording regions 210, 220, 230, 240... for sets of image data information are set in order from its head. A set of image data information includes captured image data, mask image data, and information specifying the imaging conditions for each region. Each of the recording regions 210, 220, 230, 240... for a set of image data information respectively includes a header recording region 211, 221, 231, 241... for image data and a captured-image image data recording region 212, 222, 232, 242.... In the image data, the first item of image data (image data (1)) is also sometimes termed the leading image data.

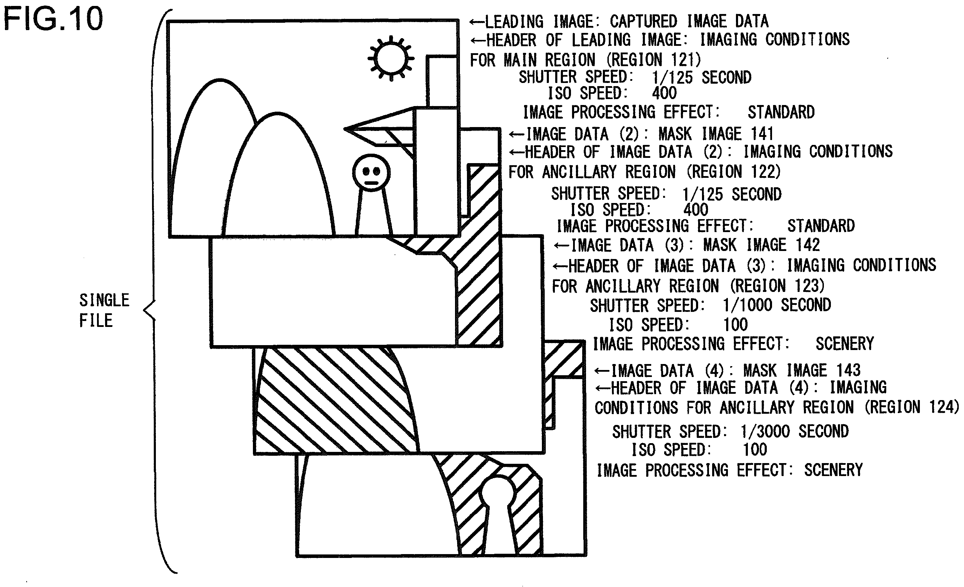

FIG. 10 is a figure conceptually showing an example of a single image file that has been generated by the recording control unit 23d in accordance with the multi-picture format. In FIGS. 9 and 10, the recording control unit 23d records captured image data that has been generated by image capture processing in the image data recording region 212 of the recording region 210 for the first item of image data information, and records information specifying the imaging conditions for the main region, in other words for the region 121 including the person 101 (i.e. "shutter speed: 1/125 second", "ISO speed: 400", and "image processing effect: standard"), in the header recording region 211. And, for example, the recording control unit 23d records mask image data for the mask image 141 for the region 122 including the building 102 in the second recording region 222 for image data from the head (image data (2)). And the recording control unit 23d records information specifying the imaging conditions (i.e. "shutter speed: 1/125 second", "ISO speed: 400", and "image processing effect: standard") for the region 122 including the building 102, which is an ancillary region, in the header recording region 221 of the second recording region 220 from the head.

In a similar manner, for example, the recording control unit 23d records mask image data for the mask image 142 for the region 123 including the mountains 103 in the third recording region 232 for image data from the head (image data (3)), and records information specifying the imaging conditions (i.e. "shutter speed: 1/1000 second", "ISO speed: 100", and "image processing effect: scenery") for the region 123 including the mountains 103, which is an ancillary region, in the header recording region 231. And in a similar manner, for example, the recording control unit 23d records mask image data for the mask image 143 for the region 124 including the background 104 in the fourth recording region 242 for image data from the head (image data (4)), and records information specifying the imaging conditions (i.e. "shutter speed: 1/3000 second", "ISO speed: 100", and "image processing effect: scenery") for the region 124 including the background 104, which is an ancillary region, in the header recording region 241.

The image data that is recorded in the image data recording regions 212, 222, 232, 242... could be, for example, image data that is compressed in accordance with a predetermined format; or it could also be image data in RAW format.

Thereafter, the recording control unit 23d records the single image file that has been generated in the above manner into the memory card 25, which is a detachable recording medium.

By generating the image file in this manner, for example, it is possible to perform editing or processing on the image capturing device 10 or on an external image reproduction device by using so-called photo-retouching software, while taking into account the imaging conditions for each region. In other words, for example, it is possible to perform editing or processing while taking into consideration the imaging conditions for each region, so that the reproduced image comes closer to the appearance to the human eye. Furthermore, when thus performing correction to the captured image data with the image capturing device 10 or the image reproduction device, it is possible to take into account the imaging conditions for each region, and to perform correction according thereto. In other words, for example, since the noise becomes high in a region in which the ISO speed is high, accordingly it becomes possible to perform correction to reduce the noise to a region in which the ISO speed is high.

Moreover while, in the explanation given above, the captured image data was recorded in the recording region 212 after having been compressed in a predetermined format, instead, it would possible to record the captured image data in the recording region 212 in RAW format. If the captured image data is recorded in the recording region 212 in RAW format, then it becomes possible to perform image development under different conditions for each region, while taking into consideration the imaging conditions for each region.

### - Flow chart -

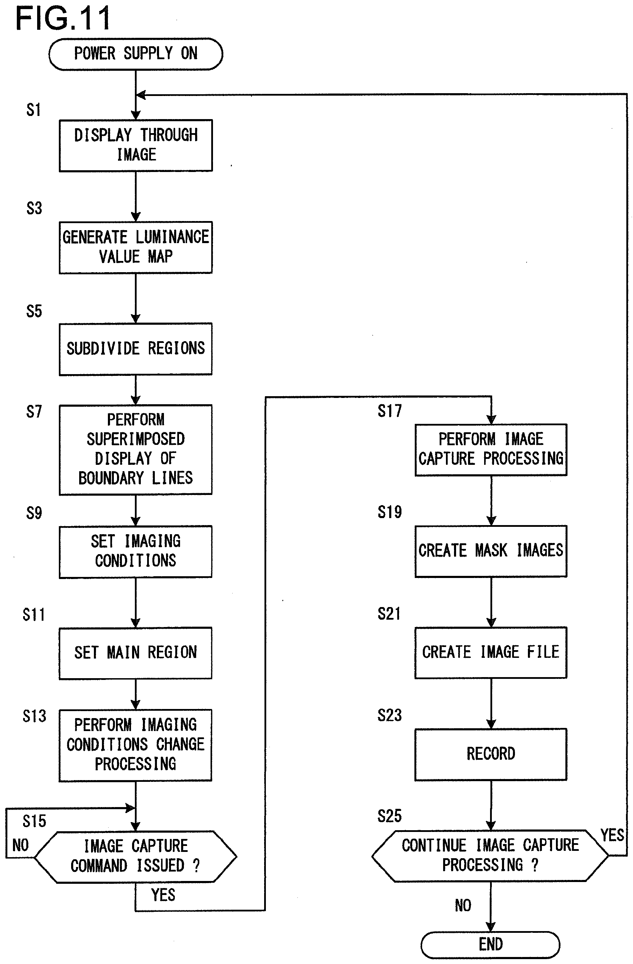

FIG. 11 is a flow chart of processing for generating the single image file described above and for recording that file into the memory card 25. When the power supply for the image capturing device 10 is turned ON, the program whose processing is shown in FIG. 11 is started and is executed by the control unit 23. In step S1 the imaging control unit 23e controls the image capture pixels 31 of the image sensor 22 so that the charge accumulation times and the amplification ratios of the image capture pixels 31 have the same value for all of the unit groups 32, for example determined on the basis of the luminance of the subject, and displays a subject image 110 upon the liquid crystal monitor 24 based upon the image signals from the image capture pixels 31 that have been controlled in this manner.

In step S3 the luminance distribution detection unit 23a detects the luminance distribution of the subject image 110. And the luminance value map generation unit 23f generates a luminance value map that specifies this luminance distribution in a two dimensional manner. Then in step S5, on the basis of this luminance value map that has been generated by the luminance value map generation unit 23f, the region subdivision unit 23b subdivides the subject image 110 into the plurality of regions 121 through 124 shown in FIG. 4. And in step S7 the control unit 23 displays the boundary lines 131 through 133 for the regions 121 through 121 subdivided by the region subdivision unit 23b as superimposed upon the subject image 110, as shown in FIG. 5.

Then in step S9 the imaging conditions setting unit 23c sets imaging conditions for each of the regions 121 through 124 subdivided by the region subdivision unit 23b on the basis of the luminance value map generated by the luminance value map generation unit 23f for each of the regions 121 through 124. And in step S11, from the subject image 110, the control unit 23 determines the person 101 as being the main region. And then in step S13 the control unit 23 receives any change of the set value of any desired setting item for any desired region due to actuation by the user in the imaging conditions for the various regions that have automatically been set by the imaging conditions setting unit 23c.

In step S15 the control unit 23 makes a decision as to whether or not a command has been received from the user for image capture, in other words as to whether or not the release button of the actuation unit 26 or a button that commands image capture processing has been actuated. If an affirmative decision is reached in step S 15, then the flow of control proceeds to step S 17, whereas if a negative decision is reached in step S 15, the flow of control returns to step S 15.

And in step S17 the control unit 23 performs image capture processing under the imaging conditions and the image processing conditions that are set by the imaging conditions setting unit 23c for each of the plurality of regions respectively. Then in step S19 the recording control unit 23d generates the mask images 141 through 143 for the ancillary regions, as shown in FIGS. 6 through 8. And in step S21, as described above, the recording control unit 23d generates a single image file in which the captured image data, mask image data for the mask images, and information specifying the imaging conditions for each region is stored.

Then in step S23 the recording control unit 23d records the single image file that has been obtained as described above into the memory card 25, which is a detachable recording medium.

And then in step S25 the control unit 23 determines whether or not to continue image capture processing. For example, the control unit 23 decides whether or not the power supply of the image capturing device 10 is turned OFF. If in step S25 it is decided that image capture is to be continued, then the flow of control returns to step S1, while if it is decided that image capture is to end, then this program terminates.

With the first embodiment of the present invention as described above, the following beneficial effects are obtained.
(1) It is arranged for image capture to be performed by, among the plurality of imaging regions, controlling a first imaging region (for example, the region 121) on the basis of first imaging conditions (for example, the imaging conditions for the region 121), while controlling a second imaging region that is different from the first imaging region (for example, the region 122) on the basis of second imaging conditions (for example, the imaging conditions for the region 122). And it is arranged to record the captured image data that has been captured in this manner and information related to the first imaging conditions in mutual correspondence. Moreover, it is arranged to record region information specifying the imaging region that is controlled under the second imaging conditions (for example, the mask image 141 for the region 122) and information related to the second imaging conditions in mutual correspondence. In other words, it is arranged to create a single image file in accordance with a per se known multi-picture format, in which the captured image data, mask image data for the mask images, and information specifying the imaging conditions for each region are stored. Due to this, even for captured image data in which the imaging conditions are different for each of the imaging regions, it is possible to store the captured image data and the imaging conditions in an appropriate manner. Moreover, even for captured image data in which the imaging conditions are different for each of the imaging regions, it is possible to perform photo-retouching or automatic correction of the image or the like in an appropriate manner. Yet further, by using the memory card 25, which is a recording medium, upon which the image file is recorded in this manner, it is possible to read in the image file described above with devices of various types, and thus to expand the range of utilization of the image file.
(2) The recording control unit 23d is built to generate mask images for the ancillary regions on the basis of the information related to the subdivision into regions. Since, by doing this, it is possible to record as image data the region information that specifies which regions of the subject image the ancillary regions are, accordingly the data structure of the image file becomes simple.
(3) It is arranged to record the captured image data in the image data recording region 212 within the recording region 210 for the information for the leading image, and to record the information specifying the imaging conditions for the main region in the header recording region 211. Moreover, for any one of the ancillary regions, it is arranged to record the mask image data for the mask image in a captured image data recording region within the recording region for the second and subsequent sets of image data information from the head of data. And it is arranged to record information specifying the imaging conditions for this ancillary region in a header recording region within the recording region for this set of image data information. Due to this, the data in the image file has a rational structure.

### -- Second embodiment --

A second embodiment of the recording device according to the present invention will now be explained. In the following explanation, structural elements that are the same as ones in the first embodiment will be denoted by the same reference symbols, and the explanation will focus upon the points of difference. Features that are not particularly explained are to be understood as being the same as in the first embodiment. In this embodiment, principally, the aspect that the user is able manually to subdivide the image of the subject into a plurality of regions is different from the first embodiment.

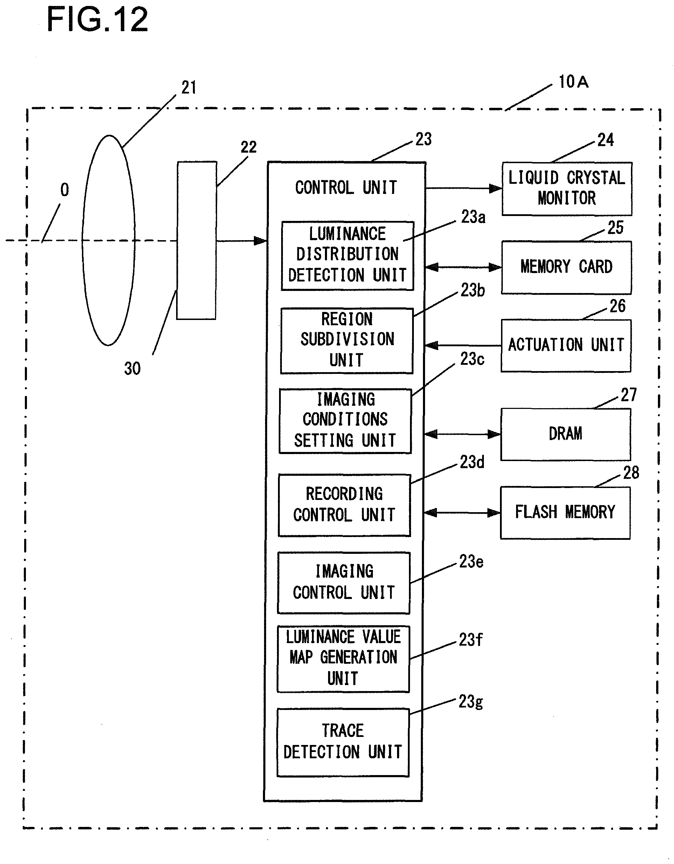

FIG 12 is a block diagram showing the structure of an image capturing device 10A of the second embodiment. With this image capturing device 10A of the second embodiment, the point of difference from the first embodiment is the feature that a trace detection unit 23g is further provided. The other features are the same as in the image capturing device 10 of the first embodiment. When the user traces the outline of a desired portion of the subject with his finger or the like over the subject image upon the liquid crystal monitor 24, the trace detection unit 23g detects the trace along which that finger shifts.

On the basis of the shifting trace of the user's finger as detected by the trace detection unit 23g, the region subdivision unit 23b subdivides the subject image into a plurality of regions in a similar manner to the case shown in FIG. 4. And the imaging conditions setting unit 23 sets imaging conditions for the various regions on the basis of the luminance distribution, which is the result of detection by the luminance distribution detection unit 23a, and the plurality of regions that have been subdivided by the region subdivision unit 23b. In concrete terms, the imaging conditions setting unit 23c sets the imaging conditions on the basis of the average luminance values of the luminance distribution within the regions that have been subdivided by the region subdivision unit 23b. However, instead of setting the imaging conditions on the basis of the average luminance values of the light distribution within the regions subdivided by the region subdivision unit 23b, it would also be acceptable to arrange for the imaging conditions setting unit 23c to set the imaging conditions by manual actuation for each of the regions that have been subdivided by the region subdivision unit 23b. For example, it is acceptable that every time the user touches any of the regions, an imaging conditions setting screen for the touched region is displayed upon the monitor 24, and that the user sets the imaging conditions by touching the imaging conditions setting screen. Other functions and operation may be the same as those of the first embodiment.

With the second embodiment of the present invention as described above, in addition to the beneficial effects of the first embodiment, the following further beneficial effect is obtained.
(1) It is arranged to subdivide the subject image into a plurality of regions on the basis of the trace detected by the trace detection unit 23g. Since, due to this, it is possible to subdivide the subject image into a plurality of regions as intended by the user, accordingly it becomes possible to set the imaging conditions intended by the user for each of the regions, so that a subject image of the image quality intended by the user can be obtained simply and easily.

### -- Variation --

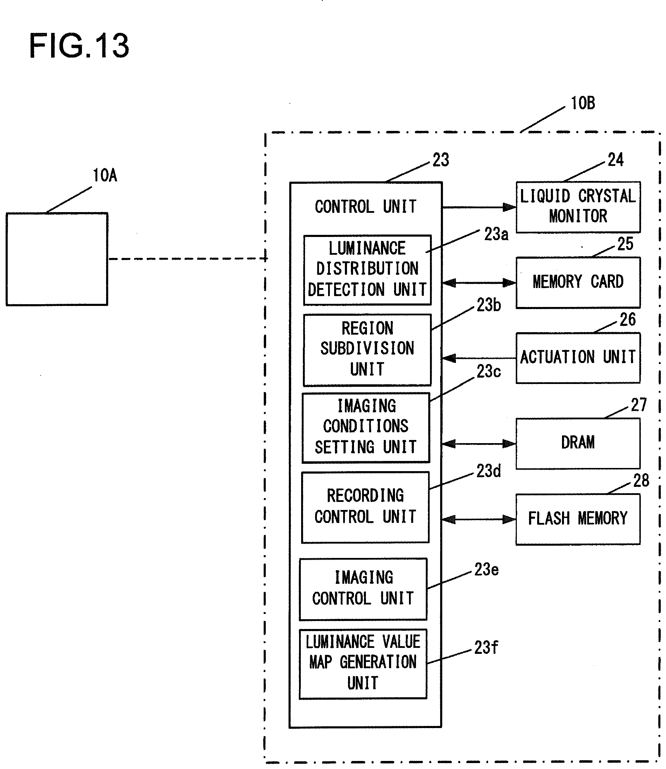

(1) While, in the explanation given above, "shutter speed", "ISO speed", and "image processing effect" were cited as examples of setting items in the imaging conditions, and, when recording information specifying the imaging conditions, it was arranged to record the set values of all the setting items that have been shown by way of example as imaging conditions related to each of the mask images, this should not be considered as being limitative of the present invention. For example, it would be acceptable to arrange to record only the imaging conditions that are different from the imaging conditions for the leading image in the header recording region of each individual image.
(2) While, in the explanation given above, it was arranged to create a mask image for each of the ancillary regions, this should not be considered as being limitative of the present invention. For example, if a plurality of ancillary regions are present for which the set values for all of the setting items in the imaging conditions agree with one another, then it would be acceptable to arrange for the recording control unit 23d to create a single mask image that specifies which regions of the subject image that plurality of ancillary regions are. Moreover, to concentrate attention upon any one of the setting items in the imaging conditions, if a plurality of ancillary regions are present for which the set value of that setting item is the same, then it will be acceptable to arrange for the recording control unit 23d to create a single mask image that specifies which regions of the subject image that plurality of ancillary regions are.
(3) While, in the explanation given above, a single image file was generated in accordance with a per se known multi-picture format, in which were stored the captured image data, the mask image data for the mask images, and information specifying the imaging conditions for each region, this should not be considered as being limitative of the present invention. For example, it would also be acceptable to employ a different file format, even though it is not a per se known multi-picture format, for generating a single image file in which are stored the captured image data, the mask image data for the mask images, and information specifying the imaging conditions for each region. In other words, it would also be acceptable to employ a file format other than a per se known multi-picture format, providing that it is capable of recording, in a single image file, image data for a plurality of regions related to a single subject image along with information (appended information) specifying the imaging conditions for the image data for each of that plurality of regions.
(4) While in the explanation given above a structure was described in which, in accordance with a per se known multi-picture format, a single image file was generated in which were stored the captured image data, the mask image data for the mask images, and information specifying the imaging conditions for each region, this should not be considered as being limitative of the present invention. For example, even if the subject image and the mask images are recorded in different image files, it would be sufficient to record the subject image and the mask images in mutual correspondence. In other words, it would also be acceptable to arrange to record the subject image and the mask images in different image files, provided that the image data for the subject image and the information specifying the imaging conditions for the main region are formed into a single block in mutual correspondence, for the other regions (i.e. the ancillary regions) the information specifying those regions and the information specifying the imaging conditions for those ancillary regions are formed into single block in mutual correspondence, and the above plurality of blocks are recorded in mutual correspondence.
(5) The image capturing device 10 may be an integrated lens type camera, or may be a exchangeable lens type camera in which an interchangeable lens is detachably attached to a camera body; for example, it may be an information terminal device such as a tablet type information terminal device or a smart phone, or a PC or a game machine that is equipped with a camera.
(6) While, in the explanation given above, it was assumed that the image capturing device 10 was endowed with an image capture function, in other words that the image capturing device 10 was equipped with the imaging optical system 21 and the image sensor 22, this should not be considered as being limitative of the present invention. For example, as shown in FIG. 13, a recording device 10B, that is built so as to be capable of transmitting and receiving image signals and control signals of various types by cable or by wireless with an external device 10A that is equipped with an image sensor similar to the image sensor 22 described above, would also be acceptable. In the example shown in FIG. 13, among the various functions of the image capturing device 10 described above, the external device 10A is endowed with the functions related to image capture, while the recording device 10B is endowed with the other functions.
(7) While it is arranged to set the main region from the subject image in the through image 110 before real image capturing, this should not be considered as being limitative of the present invention. For example, it would also be acceptable to arrange to set the main region from the subject image that has been obtained by the real image capturing, after real image capturing has been completed.
(8) While, in the explanation given above, no particular mention was made of the minimum unit for region subdivision, it would also be acceptable, for example, to arrange for the minimum unit for region subdivision to be a single unit group 32, for example one pixel.
(9) The various embodiments and variation described above could also be employed in various combinations.

It should be understood that the programs according to the embodiments described above could also be supplied as computer-readable program products for computers using various types of recording media or data signals (carrier waves) or the like. And the programs described above could be supplied via a recording medium such as a CD-ROM or the like, or via a data signal such as the internet or the like.

Moreover, it should be understood that the present invention is not limited to the embodiments described above.

The content of the disclosure of the following application, upon which priority is claimed, is hereby incorporated herein by reference:
Japanese Patent Application No. 2014-202291 (filed September 30, 2014).

### REFERENCE SIGNS LIST

10, 10A: image capturing devices, 22: image sensor, 22a: imaging control unit, 23: control unit, 23a: luminance distribution detection unit, 23b: region subdivision unit, 23c: imaging conditions setting unit, 23d: recording control unit, 23e: imaging control unit, 23f: luminance value map generation unit, 23g: trace detection unit, 24: liquid crystal monitor, 25: memory card, 26: actuation unit.

## Claims

1. An electronic device, comprising:
an input unit that inputs imaging condition data for each imaging region of an imaging unit that has a plurality of imaging regions with the imaging conditions being different for each of the imaging regions, and position information data for the imaging regions; and
a recording control unit that records, in a recording unit, imaging condition data for the imaging regions and position information data for the imaging regions, both are inputted from the input unit.

2. An electronic device according to Claim 1, wherein
the position information data for the imaging regions is position information data for the imaging regions in the imaging unit.

3. An electronic device according to Claim 1 or Claim 2, wherein:
the input unit inputs image data generated by the imaging unit, in which the imaging conditions are different for each of the imaging regions; and
the recording control unit records the image data inputted from the input unit in the recording unit.

4. An electronic device according to Claim 3, wherein
the recording control unit records image data in the recording unit, specifying the positions of the imaging regions as the position information data for the imaging regions.

5. An electronic device according to Claim 3 or Claim 4, wherein:
the input unit inputs; as the image data, image data generated by the imaging unit upon which a first imaging condition is set for a first imaging region among the plurality of imaging regions and a second imaging condition is set for a second imaging region among the plurality of imaging regions; as the imaging condition data, data of the first imaging condition and data of the second imaging condition; and as the position information data for the imaging regions, position information data for the second imaging region; and
the recording control unit records in the recording unit; as the image data, image data, inputted from the input unit, generated by the imaging unit upon which the first imaging condition is set for the first imaging region and the second imaging condition is set for the second imaging region; as the imaging condition data, the data of the first imaging condition and the data of the second imaging condition; and as the position information data for the imaging regions, the position information data for the second imaging region.

6. An electronic device according to Claim 5, wherein
the recording control unit records in the recording unit, as the position information data for the second imaging region, image data specifying the position of the second imaging region.

7. An electronic device according to Claim 6, wherein
the recording control unit records, in the recording unit, a single file containing the image data, the data of the first imaging condition, the data of the second imaging condition, and image data specifying the position of the second imaging region in the imaging unit.

8. An electronic device according to Claim 7, wherein
the single image file is an image file in a multi-picture format.

9. An electronic device according to Claim 7, wherein
the recording control unit records, in the recording unit, a first file that contains the image data and the data of the first imaging condition, and a second file that contains the data of the second imaging condition and image data specifying the position of the second imaging region.

10. An electronic device according to Claim 9, wherein
the recording control unit records the first file and the second file in mutual correspondence in the recording unit.

11. An electronic device according to any one of Claims 1 through 10, wherein
the imaging conditions include at least one of exposure time of the imaging unit, amplification ratio, and frame rate.
